# EUROPEAN PATENT APPLICATION

(11) **EP 3 833 014 A1**
(43) Date of publication of application: **09.06.2021**
(21) Application number: 20212014.3
(22) Date of filing: 04.12.2020
(51) Int. Cl.: H04N 7/18, H04N 5/232, H04N 21/218, A63B 24/00

(54) **SYSTEMS AND METHODS FOR TRACKING A PARTICIPANT USING MULTIPLE CAMERAS**

(30) Priority: 04.12.2019 US 201962943397 P
(71) Applicant: Yullr, LLC, Jackson NH 03846 (US)
(72) Inventor: DOUCETTE, Sean, Jackson, NH New Hampshire 03846 (US)
(74) Representative: Bettridge, Paul Sebastian

(57) **Abstract**

Systems and methods of controlling the same include a video interface to receive at least one video stream from a plurality of cameras, a signal interface to receive a time-of-day value and an identifier of a participant; a processor, and a memory storing instructions that when executed cause the processor to receive, from the signal interface, the time-of-day value and the identifier of the participant; locate the participant in a first video stream from a first camera, control the first camera based on the location of the participant in the first video stream; based at least in part on the time-of-day value and the identifier of the participant, locate the participant in a second video stream from a second camera, control the second camera based on the location of the participant in the second video stream, and generate a compiled video stream of the participant from the first and second video streams.

## Description

### CROSS-REFERENCE TO RELATED APPLICATION

This application claims priority under 35 U.S.C. §119(e) to U.S. Provisional Application Serial No. 62/943,397 titled "SYSTEMS AND METHODS FOR TRACKING A PARTICIPANT USING MULTIPLE CAMERAS," filed December 4, 2019, which is incorporated herein by reference in its entirety for all purposes.

### BACKGROUND

### Technical Field

Aspects of the present disclosure relate to object tracking in images, and more particularly to systems and methods of tracking a person using multiple cameras.

### Discussion of the Related Art

Sports broadcasting includes the use of multiple cameras to capture different angles of players or other participants moving in a given scene. To provide live footage of a fast-paced sport requiring multiple cameras to cover all possible participant locations on a field or course, for example downhill skiing, some broadcasting techniques include manually switching between different cameras to show the participant's progress from one camera to the next.

### SUMMARY

Aspects and embodiments are directed to a system for tracking a participant comprising a video interface configured to receive at least one video stream from a plurality of cameras, a signal interface configured to receive a time-of-day value and an identifier of the participant, at least one processor, and a memory storing instructions that when executed by the at least one processor cause the at least one processor to receive, from the signal interface, the time-of-day value and the identifier of the participant, locate the participant in a first video stream from a first camera in the plurality of cameras, control an action of the first camera based on the location of the participant in the first video stream, based at least in part on the time-of-day value and the identifier of the participant, locate the participant in a second video stream from a second camera in the plurality of cameras, control an action of the second camera based on the location of the participant in the second video stream, and generate a compiled video stream of the participant from at least the first video stream and the second video stream.

In one example, the signal interface is a virtual serial port configured to receive a clock signal from a serial port of a timing device.

In another example, the action of the first camera is a controlled pan, tilt, and/or zoom of the first camera, or the action of the first camera changing between a display on mode and a display off mode of the camera.

In one example, the instructions when executed by the at least one processor further cause the processor to, detect the participant in a frame of the first video stream, generate a bounding box around the detected participant in the first frame, determine pan, tilt, and/or zoom parameters to center the bounding box and the participant in a subsequent frame, detect the participant in a second frame of the first video stream, and send a command to the first camera to implement the controlled pan, tilt, and/or zoom of the first camera according to the determined pan, tilt, and/or zoom parameters.

In another example, the instructions when executed by the at least one processor further cause the processor to provide the first frame of the first video stream as a low-resolution image, determine coordinates of the participant in the low-resolution image, calculate a size and a position of the participant in the low-resolution image, and generate the bounding box around the detected participant based on the calculated size and position of the participant.

In one example, the instructions when executed by the at least one processor further cause the processor to detect a start of an event from a first image of the at least one video stream, and/or detect an end of the event from a second image of the at least one video stream.

In another example, the instructions when executed by the at least one processor further cause the processor to transmit a live stream of the participant in a course to at least one display within a network.

In one example, the instructions when executed by the at least one processor further cause the processor to transmit the compiled video stream of the participant to a server.

In another example, the instructions when executed by the at least one processor further cause the processor to overlay at least one graphical element over the compiled video stream, wherein the at least one graphical element displays information about the participant and/or a performance of the participant.

In one example, the instructions when executed by the at least one processor further cause the processor to detect a predetermined period of a lack of progress of the participant, categorize the detection as a Did Not Finish (DNF) event, and generate the compiled video beginning at the time-of-day value and ending at the detection of the DNF event.

Aspects and embodiments are directed to a method of tracking a participant by a system including a video interface, a signal interface, at least one processor, and a memory storing instructions executed by the at least one processor, the method comprising receiving, from the video interface, at least one video stream from a plurality of cameras, receiving, from the signal interface, the time-of-day value and the identifier of the participant, and the processor, when executing the instructions locating the participant in a first video stream from a first camera in the plurality of cameras, controlling an action of the first camera based on the location of the participant in the first video stream, based at least in part on the time-of-day value and the identifier of the participant, locating the participant in a second video stream from a second camera in the plurality of cameras, controlling an action of the second camera based on the location of the participant in the second video stream, and generating a compiled video stream of the participant from at least the first video stream and the second video stream.

In one example, the signal interface is a virtual serial port, the virtual serial port receiving a clock signal from a serial port of a timing device.

In another example, the action of the first camera is a controlled pan, tilt, and/or zoom of the first camera; or the action of the first camera is changing between a display on mode and a display off mode of the camera.

In one example, the processor, when executing the instructions detecting the participant in a frame of the first video stream, generating a bounding box around the detected participant in the first frame, determining pan, tilt, and/or zoom parameters to center the bounding box and the participant in a subsequent frame, detecting the participant in a second frame of the first video stream, and sending a command to the first camera to implement the controlled pan, tilt, and/or zoom of the first camera according to the determined pan, tilt, and/or zoom parameters.

In another example, the processor, when executing the instructions providing the first frame of the first video stream as a low-resolution image, determining coordinates of the participant in the low-resolution image, calculating a size and a position of the participant in the low-resolution image, and generating the bounding box around the detected participant based on the calculated size and position of the participant.

In one example, the processor, when executing the instructions detecting a start of an event from a first image of the at least one video stream, and/or detecting an end of the event from a second image of the at least one video stream.

In another example, the processor, when executing the instructions transmitting a live stream of the participant in a course to at least one display within a network.

In one example, the processor, when executing the instructions transmitting the compiled video stream of the participant to a server.

In another example, the processor, when executing the instructions overlaying at least one graphical element over the compiled video stream, wherein the at least one graphical element displays information about the participant and/or a performance of the participant.

In one example, the processor, when executing the instructions detecting a predetermined period of a lack of progress of the participant, categorizing the detection as a Did Not Finish (DNF) event, and generating the compiled video beginning at the time-of-day value and ending at the detection of the DNF event.

Still other aspects, embodiments, and advantages of these exemplary aspects and embodiments are discussed in detail below. Embodiments disclosed herein may be combined with other embodiments in any manner consistent with at least one of the principles disclosed herein, and references to "an embodiment," "some embodiments," "an alternate embodiment," "various embodiments," "one embodiment" or the like are not necessarily mutually exclusive and are intended to indicate that a particular feature, structure, or characteristic described may be included in at least one embodiment. The appearances of such terms herein are not necessarily all referring to the same embodiment.

### BRIEF DESCRIPTION OF THE DRAWINGS

Various aspects of at least one embodiment are discussed below with reference to the accompanying figures, which are not intended to be drawn to scale. The figures are included to provide illustration and a further understanding of the various aspects and embodiments, and are incorporated in and constitute a part of this specification, but are not intended as a definition of the limits of the disclosure. In the figures, each identical or nearly identical component that is illustrated in various figures is represented by a like numeral. For purposes of clarity, not every component may be labeled in every figure. In the figures:
FIG. 1 is a functional block diagram of a system according to examples described herein;
FIG. 2 is an illustration of ski courses and various fields of view according to examples described herein;
FIG. 3 is a sequence of frames including a tracked participant according to examples described herein;
FIG. 4 is a flowchart of a logic process for operating a system according to examples described herein;
FIG. 5 is a functional block diagram of one example of a processing system according to examples described herein; and
FIG. 6 is a diagram of one example of a storage system according to examples described herein.

### DETAILED DESCRIPTION

A participant in sports such as downhill skiing, BMX bicycling, and Motocross tends to traverse large enough distances to necessitate the use of multiple cameras to properly broadcast and/or record the participant's complete actions and movements during the sport. A problem exists in sports broadcasting, as well as object tracking in general, of properly maintaining the detection and tracking of a moving object or person from one image sequence to another from different cameras. This problem is exacerbated when attempting to automatically compile the various clips of the participant from each of the cameras into a single video reflecting the participant's movement in real time. Aspects and embodiments described herein provide solutions to this problem.

Timing information is used by a system to track participants in an event (e.g., downhill skiers) being filmed by a number of cameras positioned to capture overlapping portions of a course (e.g., a ski course). In particular, a first camera begins tracking the participant at the beginning of the event, with a clock providing timing information to the system. The first camera tracks the participant through a first portion of the course, using object recognition techniques to follow the participant by panning, tilting, and/or zooming the first camera. As the participant moves into the field of view of a second camera, the second camera begins tracking the participant in the same manner. According to certain aspects, the first camera is re-tasked to begin tracking a subsequent participant. The participant may be handed off through any number of cameras in this manner, with the individual footage from each camera compiled to capture footage of the participant through the entire event.

A display device, in some examples, selectively displays the compiled video stream in real time (or near-real time) to allow spectators and coaches to watch the participant's progress through the course for entertainment or informational purposes. At the conclusion of the event (e.g., the skier's run), the compiled video of the participant during the event is generated by combining the video streams of the participant from the various cameras. In some embodiments, graphics are added to the compiled video indicating the participant's name, identifier (e.g., bib number), elapsed time, total time, progress through the course, or any other relevant information. The compiled video may be uploaded to a server for later streaming by the participant and the participant's family, friends, or coaches, for example, as part of a paid subscription program.

The compiled video may be provided through a computer or mobile app, and provides unique access to non-professional sports, such as youth ski league racing, adult "beer league" racing, terrain park "jump cams," and mountain bike racing, and may be used to inform or supplement educational activities such as ski lessons. The compiled video may also be used for safety purposes, such as by ski patrol personnel monitoring participants in an event.

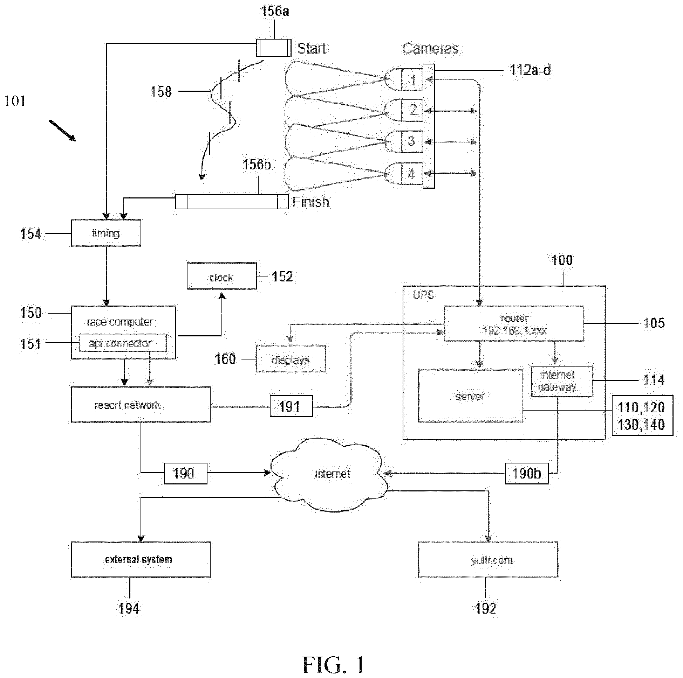

An exemplary system 100 is shown in FIG. 1 as part of an object tracking environment generally indicated at 101. The system 100 includes a video interface 110 and a signal interface 120. The video interface 110 and the signal interface 120 may be configured to receive video and/or signal data via a router 105.

The video interface 110 receives video streams from a plurality of cameras 112a-d arrayed along an event course 158 (e.g., a ski course). The signal interface 120 receives timing information about a participant traversing the course, which may include a time-of-day signal corresponding to when the user crosses a starting line 156a of the course 158, crosses a finish line 156b of the course 158, or passes a checkpoint (not shown) on the course 158. The information may also include an identifier of the participant and/or the event, such as the participant's name, bib number, or other identifier. The signal interface 120 may execute an Application Programming Interface (API) through which the timing information is provided by other devices executing an API connector, as discussed further below.

The information provided to the signal interface 120 may be generated by a timing device 154, which outputs time-of-day or other timing information to a race computer 150. In other embodiments, the timing device 154 may track an elapsed time of the event by participant. The timing device may provide the information through a serial port connection. Known timing devices and software systems include Alge, Tag Heuer, Split Second, Vola, and Brower Timing Systems. However, embodiments disclosed herein are not limited to such known devices.

The information provided to the signal interface 120 may be transmitted from the race computer 150 to the signal interface 120 via one or more networks 190, 191, such as a local network for a ski resort and/or the Internet. The race computer 150 may execute an API connector 151 configured to communicate with an API executed by the signal interface 120. In some examples, the timing device 154 may provide the timing information directly to the signal interface 120 (i.e., the race computer 150 and/or the network 190 may not be required in all embodiments). The timing information may also be provided to a clock 152 oriented to display real-time timing information to participants, coaches, and/or spectators.

In an exemplary embodiment, a virtual serial port connection is created on the timing computer 150 and output (e.g., timing information) is captured via software scripting that forwards the information via an API executing on the system 100.

In some embodiments, the system 100 also includes a network interface 114 configured to transmit video and other data via a network 190b (e.g., the Internet) to a server 192 or other external system 194. In other embodiments, the system 100 may utilize a local area network 190, 191 for purposes of communicating with the various system components described herein. In some examples, the video may be provided to one or more streaming video servers 192, 194 through which subscribers can view or otherwise access the video. The system 160 may also be configured to display the video on one or more displays 160, which may be situated at or near the course for the benefit of participants, coaches, and spectators. In some embodiments, the streaming video servers 192, 194 and/or the displays 160 may comprise PHP, HTML5, CSS and/or Javascript-enabled webpages that display the active tracking camera with overlaid bib number, name, running time, race name, date, and/or venue logo in an HTML5-enabled browser, such as Google Chrome. The streaming video servers may include a streaming video server 192 controlled by an entity associated with the system 100, and/or may include a third-party streaming video server 194 on which the system 100 has rights to upload and manage video streams.

In some embodiments, the system 100 may stream video and other data to a mobile application executing on a user's mobile device, for example, via the network interface 114.

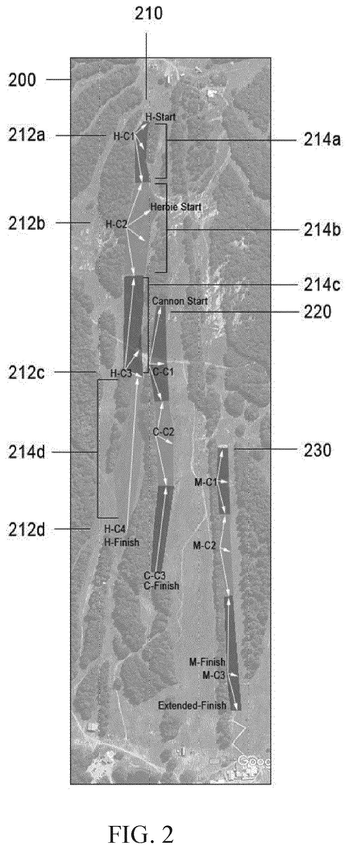

An exemplary camera layout for a ski mountain having a number of ski courses 210, 220, 230 is shown in FIG. 2. Each course 210, 220, 230 has its own respective array of cameras. For example, course 210 is covered by four cameras 212a-d, with each camera 212a-d covering a respective field of view 214a-d, with each field of view 214a-d overlapping with at least another field of view. As a participant begins a ski event by crossing a starting line 156a (thereby triggering a start pulse or other event), the first camera 212a may be deployed to track the user through the portion of the course covered by its field of view 214a. For example, as described in more detail below, the first camera 212a may pan, tilt, and/or zoom in order to keep the participant in the field of view 214a.

In some embodiments, the system 100 uses a trained object detection algorithm to locate the participant in a frame of the video stream, and controls an operation of the camera 212a in order to keep the participant within a region (e.g., the center) of the frame. In some embodiments, the parameters of the algorithm may be generated and updated using artificial intelligence and machine learning techniques.

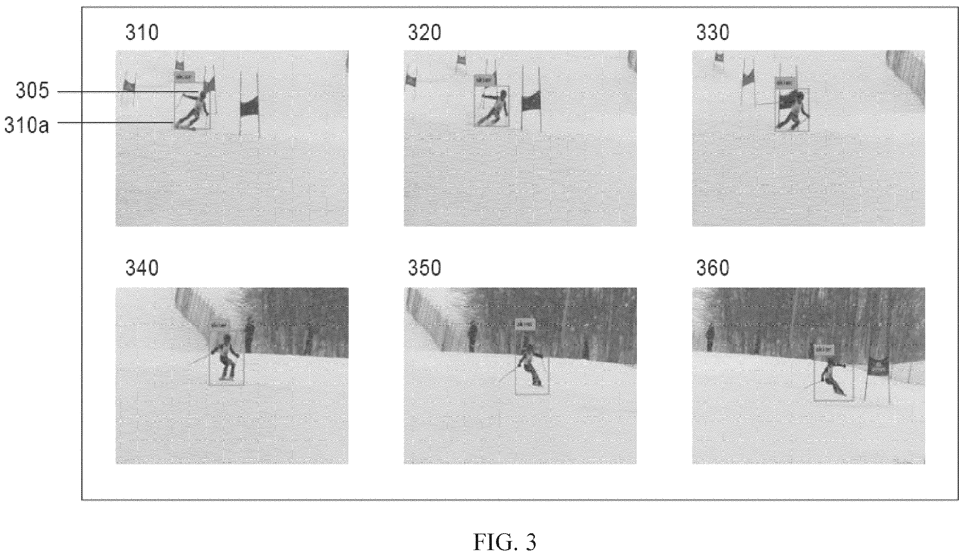

FIG. 3 includes a number of consecutive frames 310-360 from an exemplary video stream from a video camera of the system according to some embodiments. In each frame, a participant is detected using object detection algorithms. In some examples, the algorithms have been previously trained using images of participants in similar events against a variety of backgrounds having different scenery, lighting situation, and the like. For example, the algorithms have been trained using You Only Look Once (YOLO), and have been trained to differentiate between the participant and other objects in the frame (e.g., spectators or course features).

In an example, in frame 310 the system determines (e.g., via a processor) a bounding box 310a within which the participant 305 is contained. The system pans, tilts, and/or zooms the camera generating the video stream such that the bounding box 310a is centered in the frame 310. As the participant moves through the course and is captured and detected in subsequent frames 320-360, the system continues to control the camera and other cameras in order to track the participant.

In one example, the system operates a PHP service operating at x frames per second (FPS) to request an image from the camera stream. In some examples, a low-resolution image is provided for faster processing time. The system obtains coordinates of the participant in the image, and calculates the size and position of the participant in the image. Using this information, the system determines new pan, tilt, and zoom parameters of the camera to maintain the participant centered at 50% size of frame view. The system then sends a command to the camera to position and/or orient itself according to these new parameters.

Returning to FIG. 2, when the participant has progressed through the course to a point that the participant is in the field of view 214b of camera 212b, camera 212b begins tracking the participant. At some point thereafter, camera 212a (which was previously tracking the participant) may be re-tasked to the beginning of the course again to track the next participant. In some examples, both cameras 212a and 212b continue to track the participant simultaneously for some time. For example, the camera 212a continues to provide the best vantage point for spectators for some time after the participant has entered the field of view 214b of camera 212b, and the video stream from camera 212a is selected for display and/or inclusion in the compiled video during that portion of the event.

In certain examples, cameras 212a-d all operate in a similar manner, tracking the participant during a portion of the time that the participant is in the camera's respective field of view 214a-d, then reorienting in order to track a subsequent participant. In this manner, multiple participants with staggered start times are tracked on different portions of the course simultaneously.

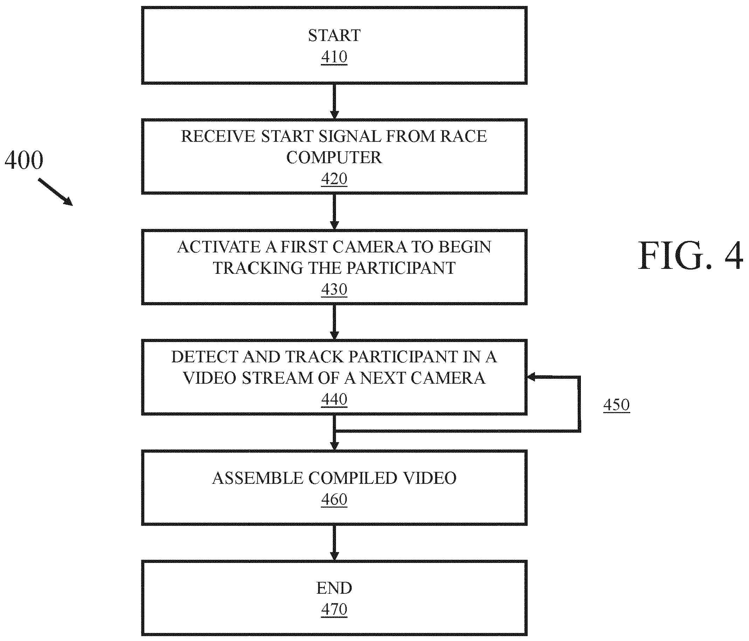

An exemplary method 400 for operating a system (e.g., system 100) is now described with reference to FIG. 4. At act 410, the method begins.

At act 420, the system (e.g., the system 100) receives a start signal from a race computer, which received a start pulse from a starting line sensor. The start pulse indicates that a participant has begun an event (e.g., a ski race). One benefit of the systems and methods of operating the same described herein is a connection to a timer system that provides the start pulse and an identifier (e.g., bib number). In certain scenarios, this is the start wand being activated that is connected to the timing system that has a bib number in its start queue. The system records the start pulse and associates it with the bib number in the queue. Accordingly, with the finish time indicated by a finish pulse, a total time length is calculated by subtracting the start time from the finish time. The timer logs the bib number start at that specific time of day. As such, the object being tracked through the connected cameras is a known object (e.g., watching and/or tracking bib #1).

In certain embodiments, determining that the participant has started a race at a starting line and/or ended a race at a finish line utilizes a camera (e.g., the camera 112a or the camera 112d) to capture one or more images of a participant. By training an algorithm to recognize the pattern of the participant signifying the start and/or end of a race, image data is used in addition or to supplement the pulse data to determine total time of the race. In some embodiments, training the algorithm includes collecting image frames captured at start and/or finish pulses, or likewise start and/or finish events of a race or section of a course, and training the YOLO algorithm to thereby detect the participant starting and/or finishing the race (or other event, such as the participant's activity from one area to another). Other embodiments include using object detection and/or motion detection algorithms know to those of ordinary skill in the art. By using image data to detect the start and/or end of a race or other participant action, a start wand and finish photocell are not required in certain embodiments.

At act 430, the system activates a first camera to begin tracking the participant through a first portion of the course as discussed above. The video stream from the first camera is selected as the current view, and may be displayed on one or more display devices and/or selected for inclusion in a compiled video to be generated of the event.

At act 440, the participant is detected in a video stream of a second camera, with both the first camera and the second camera now tracking the participant. At some point thereafter, the video stream of the second camera is selected as the current view. Some embodiments include immediately selecting the second camera upon successful detection of the participant in the field of view of the second camera. Other embodiments include a best-view selection algorithm where, given the participant being detected in more than one overlapping field of view, the camera having the least-occluded and/or largest size of the participant is selected. In one embodiment, the display devices (e.g., the display devices 160) and/or the compiled video transition from the stream of the first camera to the stream of the second camera (e.g., transitioning from the camera 112a to the camera 112b). The transition may occur when the participant reaches a particular point on the course, or after the second camera has tracked the participant for some defined amount of time. The second camera continues to track the participant, while the first camera is re-tasked to the beginning of the course.

Act 440 optionally repeats one or more times at act 450, as the participant enters the field of view of a third camera and possibly additional cameras. As the participant enters the field of the next camera, that next camera becomes the current view for purposes of display and/or inclusion in the compiled video, and the current camera is re-tasked to the beginning of its assigned field of view.

At act 460, upon the participant's completion of the course, the compiled video is assembled from the current view at each portion of the course, and the compiled video is made available for streaming and/or download through a web server (e.g., the server 192). In this manner, the participant's progress through the course is tracked and captured by a series of cameras and made available for concurrent and later viewing by participants, coaches, and spectators. At act 470, the method ends.

According to certain aspects, the method 400 includes using a presence detector (e.g., included in the system 100, not shown) to supplement data obtained and stored in act 440. In one scenario, a participant, such as a cyclist, is riding through a course. In one example, one or more of the multiple cameras being used to track the cyclist is connected (e.g., wirelessly or in a wired connection) to a presence indicator. In another example, the presence indicator is directly coupled to the system 100 (not shown). In one example, the presence indicator is a WiFi and/or Bluetooth device configured to detect mobile WiFi or Bluetooth devices (e.g., smartphones) in its proximity without requiring a password or connecting to the mobile devices. In another example, the presence indicator detects cellular signals in a similar fashion. In addition to the assembled compiled video produced in act 460, data associating a unique identifier of the mobile device and its corresponding compiled video is stored locally or in an external server over a network. As a result of using the presence indicator, the cyclist is able to log onto a server (e.g. the server 192) via a website or mobile application, and through the logon, be directed to all or a subset of the complied videos associated with the cyclist. Additional applications include, but are not limited to being placed with a view of a large snow ramp/jump in a terrain park, a half pipe of a skate park, a chairlift (e.g., to act as an automated photobooth), and a jogging path around a park.

In some embodiments, the system may be configured to respond accordingly where a participant failed to finish the course (i.e., recorded a DNF), such as by falling or otherwise stopping. In such situations, the system may be configured to detect a lack of progress through the course for a certain period of time (e.g., 5 seconds), and to categorize the event as a DNF event. The system may re-task the camera tracking the participant to prepare for a next participant, but may nonetheless generate a compiled video of the participant's progress to that point in the same manner described above. In other embodiments, the system may allow a user (e.g., a course official) to manually trigger a DNF situation or a disqualification (DSQ) of the participant, with the system appropriately generating a compiled video of that portion of the course completed by the participant.

It is understood that all or part of the methods above, including the method 400, may be fully automated or manually directed by a user. In an example, the presence indicator described above is implemented with a system (e.g. the system 100) to automatically record snowboarders and skiers in a particular run or path in a ski park and upload one or more compiled videos to the server 192 for later access, streaming, and/or download by a user. In another example, the uploaded one or more compiled videos are retained for security purposes, while one or more live feeds of the cameras are selectively viewed by a security officer monitoring safety of the ski park.

### Exemplary Computer Implementations

Processes described above are merely illustrative embodiments of systems that may be used to execute the described operations. Such illustrative embodiments are not intended to limit the scope of the present invention, as any of numerous other implementations exist for performing the invention. None of the embodiments and claims set forth herein are intended to be limited to any particular implementation, unless such claim includes a limitation explicitly reciting a particular implementation.

Processes and methods associated with various embodiments, acts thereof and various embodiments and variations of these methods and acts, individually or in combination, may be defined by computer-readable signals tangibly embodied on a computer-readable medium, for example, a non-volatile recording medium, an integrated circuit memory element, or a combination thereof. According to one embodiment, the computer-readable medium may be non-transitory in that the computer-executable instructions may be stored permanently or semi-permanently on the medium. Such signals may define instructions, for example, as part of one or more programs, that, as a result of being executed by a computer, instruct the computer to perform one or more of the methods or acts described herein, and/or various embodiments, variations and combinations thereof. Such instructions may be written in any of a plurality of programming languages, for example, Java, Visual Basic, C, C#, or C++, Fortran, Pascal, Eiffel, Basic, COBOL, etc., or any of a variety of combinations thereof. The computer-readable medium on which such instructions are stored may reside on one or more of the components of a general-purpose computer described above, and may be distributed across one or more of such components.

The computer-readable medium may be transportable such that the instructions stored thereon can be loaded onto any computer system resource to implement the aspects of the present invention discussed herein. In addition, it should be appreciated that the instructions stored on the computer-readable medium, described above, are not limited to instructions embodied as part of an application program running on a host computer. Rather, the instructions may be embodied as any type of computer code (e.g., software or microcode) that can be employed to program a processor to implement the above-discussed aspects of the present invention.

Some aspects of the invention may be implemented as distributed application components that may be executed on a number of different types of systems coupled over a computer network. Some components may be located and executed on mobile devices, servers, tablets, or other system types. Other components of a distributed system may also be used, such as databases or other component types.

Further, on each of the one or more computer systems that include one or more components of the object tracking environment 101, each of the components may reside in one or more locations on one or more systems. For example, different portions of the components of the object tracking environment 101 and the system 100 may reside in different areas of memory (e.g., RAM, ROM, disk, etc.) on one or more computer systems. Each of such one or more computer systems may include, among other components, a plurality of known components such as one or more processors, a memory system, a disk storage system, one or more network interfaces, and one or more busses or other internal communication links interconnecting the various components.

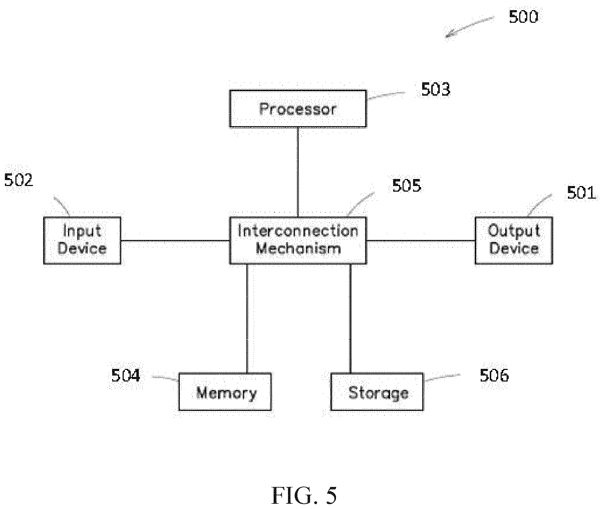

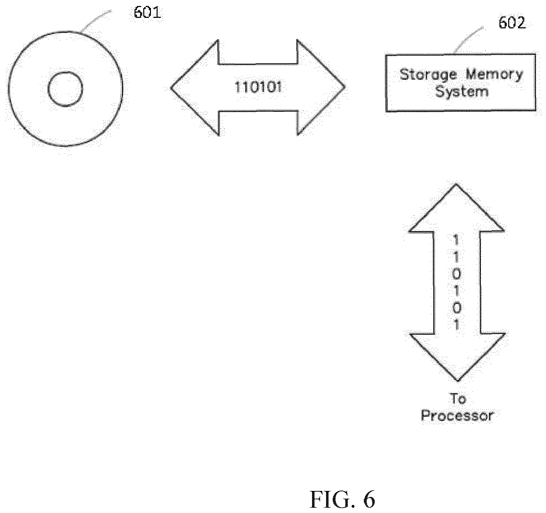

The system 100 may be implemented on a computer system described below in relation to FIGS. 5 and 6. In particular, FIG. 5 shows an example computer system 500 used to implement various aspects. FIG. 6 shows an example storage system that may be used.

System 500 is merely an illustrative embodiment of a computer system suitable for implementing various aspects of the invention, including the system 100 and the method 400. Such an illustrative embodiment is not intended to limit the scope of the invention, as any of numerous other implementations of the system, for example, are possible and are intended to fall within the scope of the invention. For example, a virtual computing platform may be used. None of the claims set forth below are intended to be limited to any particular implementation of the system unless such claim includes a limitation explicitly reciting a particular implementation.

Various embodiments according to the invention may be implemented on one or more computer systems. These computer systems may be, for example, general-purpose computers such as those based on Intel PENTIUM-type processor, Motorola PowerPC, Sun UltraSPARC, Hewlett-Packard PA-RISC processors, or any other type of processor. It should be appreciated that one or more of any type computer system may be used to partially or fully automate integration of these services with the other systems and services according to various embodiments of the invention. Further, the software design system may be located on a single computer or may be distributed among a plurality of computers attached by a communications network.

For example, various aspects of the invention may be implemented as specialized software executing in a general-purpose computer system 500 such as that shown in FIG. 5. The computer system 500 may include a processor 503 connected to one or more memory devices 504, such as a disk drive, memory, or other device for storing data. Memory 504 is typically used for storing programs and data during operation of the computer system 500. Components of computer system 500 may be coupled by an interconnection mechanism 505, which may include one or more busses (e.g., between components that are integrated within a same machine) and/or a network (e.g., between components that reside on separate discrete machines). The interconnection mechanism 505 enables communications (e.g., data, instructions) to be exchanged between system components of system 500. Computer system 500 also includes one or more input devices 502, for example, a keyboard, mouse, trackball, microphone, touch screen, and one or more output devices 501, for example, a printing device, display screen, and/or speaker. In addition, computer system 500 may contain one or more interfaces (not shown) that connect computer system 500 to a communication network (in addition or as an alternative to the interconnection mechanism 505).

The storage system 506, shown in greater detail in FIG. 6, typically includes a computer readable and writeable nonvolatile recording medium 601 in which signals are stored that define a program to be executed by the processor or information stored on or in the medium 601 to be processed by the program. The medium may, for example, be a disk or flash memory. Typically, in operation, the processor causes data to be read from the nonvolatile recording medium 601 into another memory 602 that allows for faster access to the information by the processor than does the medium 601. This memory 602 is typically a volatile, random access memory such as a dynamic random-access memory (DRAM) or static memory (SRAM).

Data may be located in storage system 506, as shown, or in memory system 504. The processor 503 generally manipulates the data within the integrated circuit memory 504, 502 and then copies the data to the medium 601 after processing is completed. A variety of mechanisms are known for managing data movement between the medium 601 and the integrated circuit memory element 504, 602, and the invention is not limited thereto. The invention is not limited to a particular memory system 504 or storage system 506.

The computer system may include specially-programmed, special-purpose hardware, for example, an application-specific integrated circuit (ASIC) or graphic processing unit (GPU). Aspects of the invention may be implemented in software, hardware or firmware, or any combination thereof. Further, such methods, acts, systems, system elements and components thereof may be implemented as part of the computer system described above or as an independent component.

Although computer system 500 is shown by way of example as one type of computer system upon which various aspects of the invention may be practiced, it should be appreciated that aspects of the invention are not limited to being implemented on the computer system as shown in FIG. 5. Various aspects of the invention may be practiced on one or more computers having a different architecture or components than that shown in FIG. 5.

Computer system 500 may be a general-purpose computer system that is programmable using a high-level computer programming language. Computer system 500 may be also implemented using specially programmed, special purpose hardware. In the computer system 500, processor 503 is typically a commercially available processor such as the well-known Pentium, Core, Core Vpro, Xeon, or Itanium class processors available from the Intel Corporation. Many other processors are available. Such a processor usually executes an operating system which may be, for example, the Windows NT, Windows 2000 (Windows ME), Windows XP, Windows Vista, Windows 7, or Windows 10 operating systems available from the Microsoft Corporation, MAC OS Snow Leopard, MAC OS X Lion operating systems available from Apple Computer, the Solaris Operating System available from Sun Microsystems, iOS, Blackberry OS, Windows 7 Mobile or Android OS operating systems, or UNIX available from various sources, such as Linux Ubuntu. Many other operating systems may be used.

The processor and operating system together define a computer platform for which application programs in high-level programming languages are written. It should be understood that the invention is not limited to a particular computer system platform, processor, operating system, or network. Also, it should be apparent to those skilled in the art that the present invention is not limited to a specific programming language or computer system. Further, it should be appreciated that other appropriate programming languages and other appropriate computer systems could also be used.

One or more portions of the computer system may be distributed across one or more computer systems (not shown) coupled to a communications network. These computer systems also may be general-purpose computer systems. For example, various aspects of the invention may be distributed among one or more computer systems configured to provide a service (e.g., servers) to one or more client computers, or to perform an overall task as part of a distributed system. For example, various aspects of the invention may be performed on a client-server system that includes components distributed among one or more server systems that perform various functions according to various embodiments of the invention. These components may be executable, intermediate (e.g., IL) or interpreted (e.g., Java) code which communicate over a communication network (e.g., the Internet) using a communication protocol (e.g., TCP/IP).

It should be appreciated that the invention is not limited to executing on any particular system or group of systems. Also, it should be appreciated that the invention is not limited to any particular distributed architecture, network, or communication protocol.

Various embodiments of the present invention may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various aspects of the invention may be implemented in a non-programmed environment (e.g., documents created in HTML, XML or other format that, when viewed in a window of a browser program, render aspects of a graphical-user interface (GUI) or perform other functions). Various aspects of the invention may be implemented using various Internet technologies such as, for example, the well-known Common Gateway Interface (CGI) script, PHP Hyper-text Preprocessor (PHP), Active Server Pages (ASP), HyperText Markup Language (HTML), Extensible Markup Language (XML), Cascading Style Sheets (CSS), Java, JavaScript, Asynchronous JavaScript and XML (AJAX), Flash, and other programming methods. Further, various aspects of the present invention may be implemented in a cloud-based computing platform, such as the well-known EC2 or S3 platforms available commercially from Amazon.com (Seattle, WA), among others. Various aspects of the invention may be implemented as programmed or non-programmed elements, or any combination thereof.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the spirit and scope of the invention. Accordingly, the foregoing description and drawings are by way of example only.

It will be appreciated that the foregoing disclosure is not limited to tracking a single participant at a time during an event. For example, in some embodiments multiple simultaneous participants may be separately tracked using the methods described herein. For example, two or more ski racers going head to head may be tracked using a plurality of cameras as described herein. Using starting time information, each individual participant's identity may be known, and the participant's position and movement in consecutive frames may allow the system to track the participants individually or grouped throughout the course of the event.

The following is a non-exhaustive list of embodiments that may or may not be claimed.
1. A system for tracking a participant comprising:
   a video interface configured to receive at least one video stream from a plurality of cameras;
   a signal interface configured to receive a time-of-day value and an identifier of the participant;
   at least one processor; and
   a memory storing instructions that when executed by the at least one processor cause the at least one processor to:
      receive, from the signal interface, the time-of-day value and the identifier of the participant;
      locate the participant in a first video stream from a first camera in the plurality of cameras;
      control an action of the first camera based on the location of the participant in the first video stream;
      based at least in part on the time-of-day value and the identifier of the participant, locate the participant in a second video stream from a second camera in the plurality of cameras;
      control an action of the second camera based on the location of the participant in the second video stream; and
      generate a compiled video stream of the participant from at least the first video stream and the second video stream.
2. The system of embodiment 1, wherein the signal interface is a virtual serial port configured to receive a clock signal from a serial port of a timing device.
3. The system of embodiment 1, wherein the action of the first camera is a controlled pan, tilt, and/or zoom of the first camera; or
   the action of the first camera changing between a display on mode and a display off mode of the camera.
4. The system of embodiment 3, wherein the instructions when executed by the at least one processor further cause the processor to:
   detect the participant in a frame of the first video stream;
   generate a bounding box around the detected participant in the first frame;
   determine pan, tilt, and/or zoom parameters to center the bounding box and the participant in a subsequent frame;
   detect the participant in a second frame of the first video stream; and
   send a command to the first camera to implement the controlled pan, tilt, and/or zoom of the first camera according to the determined pan, tilt, and/or zoom parameters.
5. The system of embodiment 4, wherein the instructions when executed by the at least one processor further cause the processor to:
   provide the first frame of the first video stream as a low-resolution image;
   determine coordinates of the participant in the low-resolution image;
   calculate a size and a position of the participant in the low-resolution image; and
   generate the bounding box around the detected participant based on the calculated size and position of the participant.
6. The system of embodiment 1, wherein the instructions when executed by the at least one processor further cause the processor to:
   detect a start of an event from a first image of the at least one video stream; and/or
   detect an end of the event from a second image of the at least one video stream.
7. The system of embodiment 1, wherein the instructions when executed by the at least one processor further cause the processor to:
   transmit a live stream of the participant in a course to at least one display within a network.
8. The system of embodiment 1, wherein the instructions when executed by the at least one processor further cause the processor to:
   transmit the compiled video stream of the participant to a server.
9. The system of embodiment 1 wherein the instructions when executed by the at least one processor further cause the processor to:
   overlay at least one graphical element over the compiled video stream, wherein the at least one graphical element displays information about the participant and/or a performance of the participant.
10. The system of embodiment 1 wherein the instructions when executed by the at least one processor further cause the processor to:
   detect a predetermined period of a lack of progress of the participant;
   categorize the detection as a Did Not Finish (DNF) event; and
   generate the compiled video beginning at the time-of-day value and ending at the detection of the DNF event.
11. A method of tracking a participant by a system including a video interface, a signal interface, at least one processor, and a memory storing instructions executed by the at least one processor, the method comprising:
   receiving, from the video interface, at least one video stream from a plurality of cameras;
   receiving, from the signal interface, the time-of-day value and the identifier of the participant; and
   the processor, when executing the instructions:
      locating the participant in a first video stream from a first camera in the plurality of cameras;
      controlling an action of the first camera based on the location of the participant in the first video stream;
      based at least in part on the time-of-day value and the identifier of the participant, locating the participant in a second video stream from a second camera in the plurality of cameras;
      controlling an action of the second camera based on the location of the participant in the second video stream; and
      generating a compiled video stream of the participant from at least the first video stream and the second video stream.
12. The method of embodiment 11, wherein the signal interface is a virtual serial port, the virtual serial port receiving a clock signal from a serial port of a timing device.
13. The method of embodiment 11, wherein the action of the first camera is a controlled pan, tilt, and/or zoom of the first camera; or the action of the first camera is changing between a display on mode and a display off mode of the camera.
14. The method of embodiment 13, further comprising the processor, when executing the instructions:
   detecting the participant in a frame of the first video stream;
   generating a bounding box around the detected participant in the first frame;
   determining pan, tilt, and/or zoom parameters to center the bounding box and the participant in a subsequent frame;
   detecting the participant in a second frame of the first video stream; and
   sending a command to the first camera to implement the controlled pan, tilt, and/or zoom of the first camera according to the determined pan, tilt, and/or zoom parameters.
15. The method of embodiment 14, further comprising the processor, when executing the instructions:
   providing the first frame of the first video stream as a low-resolution image;
   determining coordinates of the participant in the low-resolution image;
   calculating a size and a position of the participant in the low-resolution image; and
   generating the bounding box around the detected participant based on the calculated size and position of the participant.
16. The method of embodiment 11, further comprising the processor, when executing the instructions:
   detecting a start of an event from a first image of the at least one video stream; and/or
   detecting an end of the event from a second image of the at least one video stream.
17. The method of embodiment 11, further comprising the processor, when executing the instructions:
   transmitting a live stream of the participant in a course to at least one display within a network.
18. The method of embodiment 11, further comprising the processor, when executing the instructions:
   transmitting the compiled video stream of the participant to a server.
19. The method of embodiment 11, further comprising the processor, when executing the instructions:
   overlaying at least one graphical element over the compiled video stream, wherein the at least one graphical element displays information about the participant and/or a performance of the participant.
20. The method of embodiment 11, further comprising the processor, when executing the instructions:
   detecting a predetermined period of a lack of progress of the participant;
   categorizing the detection as a Did Not Finish (DNF) event; and
   generating the compiled video beginning at the time-of-day value and ending at the detection of the DNF event.

## Claims

1. A system for tracking a participant comprising:
a video interface configured to receive at least one video stream from a plurality of cameras;
a signal interface configured to receive a time-of-day value and an identifier of the participant;
at least one processor; and
a memory storing instructions that when executed by the at least one processor cause the at least one processor to:
receive, from the signal interface, the time-of-day value and the identifier of the participant;
locate the participant in a first video stream from a first camera in the plurality of cameras;
control an action of the first camera based on the location of the participant in the first video stream;
based at least in part on the time-of-day value and the identifier of the participant, locate the participant in a second video stream from a second camera in the plurality of cameras;
control an action of the second camera based on the location of the participant in the second video stream; and
generate a compiled video stream of the participant from at least the first video stream and the second video stream.

2. A method of tracking a participant by a system including a video interface, a signal interface, at least one processor, and a memory storing instructions executed by the at least one processor, the method comprising:
receiving, from the video interface, at least one video stream from a plurality of cameras;
receiving, from the signal interface, the time-of-day value and the identifier of the participant; and
the processor, when executing the instructions:
locating the participant in a first video stream from a first camera in the plurality of cameras;
controlling an action of the first camera based on the location of the participant in the first video stream;
based at least in part on the time-of-day value and the identifier of the participant, locating the participant in a second video stream from a second camera in the plurality of cameras;
controlling an action of the second camera based on the location of the participant in the second video stream; and
generating a compiled video stream of the participant from at least the first video stream and the second video stream.

3. The system of claim 1 or the method of claim 2, wherein the signal interface is a virtual serial port configured to receive, or receiving, a clock signal from a serial port of a timing device.

4. The system or method of any preceding claim, wherein the action of the first camera is a controlled pan, tilt, and/or zoom of the first camera; or
the action of the first camera is changing between a display on mode and a display off mode of the camera.

5. The system of claim 4, wherein the instructions when executed by the at least one processor further cause the processor to perform the following steps, or the method of claim 4 further comprising the processor, when executing instructions:
detecting the participant in a frame of the first video stream;
generating a bounding box around the detected participant in the first frame;
determining pan, tilt, and/or zoom parameters to center the bounding box and the participant in a subsequent frame;
detecting the participant in a second frame of the first video stream; and
sending a command to the first camera to implement the controlled pan, tilt, and/or zoom of the first camera according to the determined pan, tilt, and/or zoom parameters.

6. The system of claim 5, wherein the instructions when executed by the at least one processor further cause the processor to perform the following steps, or the method of claim 5 further comprising the processor, when executing instructions:
providing the first frame of the first video stream as a low-resolution image;
determining coordinates of the participant in the low-resolution image;
calculating a size and a position of the participant in the low-resolution image; and
generating the bounding box around the detected participant based on the calculated size and position of the participant.

7. The system of any of claims 1 or 3 to 6, wherein the instructions when executed by the at least one processor further cause the processor to perform the following steps, or the method of any of claims 2 to 6 further comprising the processor, when executing instructions:
detecting a start of an event from a first image of the at least one video stream; and/or
detecting an end of the event from a second image of the at least one video stream.

8. The system of any of claims 1 or 3 to 7, wherein the instructions when executed by the at least one processor further cause the processor to perform the following steps, or the method of any of claims 2 to 7 further comprising the processor, when executing instructions:
transmitting a live stream of the participant in a course to at least one display within a network.

9. The system of any of claims 1 or 3 to 8, wherein the instructions when executed by the at least one processor further cause the processor to perform the following steps, or the method of any of claims 2 to 8 further comprising the processor, when executing instructions:
transmitting the compiled video stream of the participant to a server.

10. The system of any of claims 1 or 3 to 9, wherein the instructions when executed by the at least one processor further cause the processor to perform the following steps, or the method of any of claims 2 to 9 further comprising the processor, when executing instructions:
overlaying at least one graphical element over the compiled video stream, wherein the at least one graphical element displays information about the participant and/or a performance of the participant.

11. The system of any of claims 1 or 3 to 10, wherein the instructions when executed by the at least one processor further cause the processor to perform the following steps, or the method of any of claims 2 to 10 further comprising the processor, when executing instructions:
detecting a predetermined period of a lack of progress of the participant;
categorizing the detection as a Did Not Finish (DNF) event; and
generating the compiled video beginning at the time-of-day value and ending at the detection of the DNF event.
